# EUROPÄISCHE PATENTSCHRIFT

(11) **EP 1 789 246 B1**
(45) Veröffentlichungstag und Bekanntmachung des Hinweises auf die Patenterteilung: **28.11.2012**
(21) Anmeldenummer: 05779825.8
(22) Anmeldetag: 18.08.2005
(51) Int. Cl.: B29C 45/76, B29C 47/92, G05B 19/418

(54) **EDV-TECHNISCHE INTEGRATION ALLER BETRIEBLICHEN ABLÄUFE IN PRODUKTIONSMASCHINEN**
COMPUTER-TECHNOLOGICAL INTEGRATION OF ALL OPERATIONAL PROCESSES IN PRODUCTION MACHINES
INTEGRATION INFORMATIQUE DE TOUTES LES OPERATIONS DE PRODUCTION DANS DES MACHINES DE PRODUCTION

(30) Priorität: 31.08.2004 DE 102004041891
(43) Veröffentlichungstag der Anmeldung: 30.05.2007
(73) Patentinhaber: KraussMaffei Technologies GmbH, 80997 München (DE)
(72) Erfinder: WYRWOLL, Arno, 80997 München (DE)
(74) Vertreter: Wilhelm, Ludwig
(86) Internationale Anmeldenummer: PCT/EP2005/054066
(87) Internationale Veröffentlichungsnummer: WO 2006/024606

(56) Entgegenhaltungen:
- DE-U1- 20 204 360
- US-A1- 2004 093 114
- KRUEGER E ET AL: "MOEGLICHKEITEN DER GRAVIMETRISCHEN DURCHSATZERFASSUNG" PLASTVERARBEITER, ZECHNER UND HUETHIG VERLAG GMBH. SPEYER/RHEIN, DE, Bd. 43, Nr. 9, 1. September 1992 (1992-09-01), Seiten 104-106,108, XP000330625 ISSN: 0032-1338
- BRAUN P: "WAS ITS AUTOMATISCHE PROFILEXTRUSION?" KUNSTSTOFFE, CARL HANSER VERLAG, MUNCHEN, DE, Bd. 83, Nr. 11, 1. November 1993 (1993-11-01), Seiten 883-884, XP000399972 ISSN: 0023-5563
- "BETRIEBSDATENERFASSUNG ALS MITTEL ZUR BETRIEBSFUEHRUNG" PLASTVERARBEITER, ZECHNER UND HUETHIG VERLAG GMBH. SPEYER/RHEIN, DE, Bd. 43, Nr. 5, 1. Mai 1992 (1992-05-01), Seiten 130,132-134,13, XP000273033 ISSN: 0032-1338
- HERSCHBACH CH: "FERNDIAGNOSE FUER FOLIENEXTRUSIONS-ANLAGEN. REMOTE DIAGNOSIS FOR FILM EXTRUSION LINES" KUNSTSTOFFE, CARL HANSER VERLAG, MUNCHEN, DE, Bd. 88, Nr. 2, Februar 1998 (1998-02), Seiten 162-165, XP000732882 ISSN: 0023-5563
- KLEINEBRAHM M: "STEUERUNGSTECHNIK FUER DIE SPRITZGIESSMASCHINE ENTWICKLUNG UND TRENDS" KUNSTSTOFFE, CARL HANSER VERLAG, MUNCHEN, DE, Bd. 91, Nr. 5, 1. Mai 2001 (2001-05-01), Seiten 68-70, XP001012190 ISSN: 0023-5563
- BOLDER G: "BETRIEBSDATENERFASSUNG FUER DIE EXTRUSION WIRTSCHAFTLICHKEIT UND QUALITAET UEBER DIE GRAVIMETRIE" KUNSTSTOFFE, CARL HANSER VERLAG, MUNCHEN, DE, Bd. 85, Nr. 1, Januar 1995 (1995-01), Seiten 64-66, XP000486612 ISSN: 0023-5563
- JOSEPH P: "PPS-INTEGRATION IN DER VARIANTEN-FERTIGUNG" ZWF ZEITSCHRIFT FUR WIRTSCHAFTLICHE FERTIGUNG UND AUTOMATISIERUNG, CARL HANSER VERLAG. MUNCHEN, DE, Bd. 88, Nr. 12, 1. Dezember 1993 (1993-12-01), Seiten 568-571, XP000415157 ISSN: 0947-0085
- FEISTENBERGER D: "EIN PPS-SYSTEM ENTSTEHT ERFAHRUNGSBERICHT AUS EINEM UNTERNEHMEN DER AUTOMOBILZULIEFERINDUSTRIE" ZWF ZEITSCHRIFT FUR WIRTSCHAFTLICHE FERTIGUNG UND AUTOMATISIERUNG, CARL HANSER VERLAG. MUNCHEN, DE, Bd. 89, Nr. 3, 1. März 1994 (1994-03-01), Seiten 104-107, XP000429953 ISSN: 0947-0085

## Beschreibung

Die vorliegende Erfindung betrifft eine Produktionsmaschine, wie z.B. eine Vorrichtung zur Verarbeitung von Kunstoften Insbesondere betrifft die vorliegende Erfindung eine Produktionsmaschine bzw eine vorrichtung zum Verarbeiten von Kunst stoffen, welche eine im wesentlichen voll automatisierte Herstellung von Kuntstoffprodukten unter Berücksichtigung wesentlicher betrieblicher Abläufe erlaubt.

Vorrichtungen zum Verarbeiten von Kunststoffen wie beispielsweise Extrusionsmaschinen oder Spritzgussmachinen, gemäß dem Stand der Technik weisen zumeist st Steuerungseinrichtungen auf welche in einem kontinulerlichen bzw sich wiederholenden Prozess die Herstellung von Kunstsoffprodukten steuern. Üblicherweise sind derartige Steuerungseinrichtungen so ausgeführt, class während der Produktion eines Kunststoffproduktes sowohl Produktions als auch Maschinenzustandsparameter zum einen nur sehr beschränkt ausgelesen werden und zum anderen zumindest eine Auswertung dieser Informationen lediglich in sehr großen Zeitintervallen wie beispielsweise bei einem Produktwechsel oder dergleichen geschieht Des weiteren ist bei bekannten Steuerungseinrichtungen für Vorrichtungen zur Verarbeitung von Kunststoffen (Kunststoffverarbeitungsmaschinen) die Möglichkeit einer Modifikation der Maschinenzustands oder Prozessparameter während der Produktion nur sehr eingeschränkt vorgesehen und üblicherweise lediglich unmittelbar vor Ort an der entsprechenden Kunststoffverarbeitungsmaschineselbst möglich.

Das Dokument "BRAUN P: "Was ist automatische Profilextrusion?" Kunststoffe, Carl Hanser Verlag, München, DE, Bd. 83, Nr. 11, 1. November 1993 (1993-11-01), Seiten 883-884, XP000399972 ISSN: 0023-5563" offenbart eine Extrusionsanlage für eine automatische Profilextrusion mit einer Regelung des Metergewichts durch die Abzugsgeschwindigkeit in Verbindung mit einer gravimetrischen Dosierung. Das gravimetrische Dosieren stellt eine Technik für eine bessere Materialausnutzung in der Profilextrusion dar. Das Dokument "KRUEGER E et al. "Möglichkeiten der gravimetrischen Durchsatzerfassung" Plastverarbeiter, Zechner und Hüthig Verlag GmbH, Speyer/Rhein, DE, Bd. 43, Nr. 9, 1. September 1992 (1992-09-01). Seiten 104-106, 108, XP000330625 ISSN: 0032-1338" beschreibt Möglichkeiten der gravimetrischen Durchsatzerfassung bei der Profilextrusion und offenbart einen intelligenten Gravimetriksensor. Damit wird ein preisgünstiges System zur Verfügung gestellt, das über die Schnittstelle den Massedurchsatz, den Verbrauch etc. an übergeordnete Systeme zur Weiterverarbeitung übergibt. Das System ist auch interessant ais kostengünstiger Erfassungssensor für den Materialverbrauch zur reinen Betriebsdatenerfassung und Produktkalkulation.

Die US 2004/0093114 A1 offenbart ein Steuerungssystem zum Steuern des Betriebs einer Spritzgießmaschine und deren Peripherie. Bestimmte vorgegebene Ereignisse wie zum Beispiel die erwartete Beendigung der Produktion werden automatisch an eine bestimmte E-Mail-Adresse mitgeteilt, bevor dieses Ereignis eintritt.

Ganz allgemein erweist es sich dabei als Problem, dass bei bekannten. Steuerungseinrichtungen für Kunstoffverarbeitungsmaschinen eine Kommunikation mit Produktionsplanungs- und steuerungssystemen (PPS-Systeme) oder Betriebsdatenerfassunssytemen (BDE-System), wie z. B. SAP oder dergleichen aufgrund mangelnder Schnittstellenstandardisierungen nur sehr eingeschräkt und lediglich mit sehr großem Aufwand möglich ist. Bei derartigen Systemen erfolgt dann die Produkt-tionsplanung und -steuerung ausgehend vom PPS-System, was durch die eingeschränkten Kommunikationsmöglichkeiten zwischen Kunststoffverarbeitungsmaschinen und PPS-Systemen dazu führt, dass eine Produktionsplanung nur sehr unzuverlässig erfolgen kann und wesentliche Parameter häufig nicht berücksichtigt werden. Die bekannten PPS-Systeme orientieren sich grundsätzlich am unter betriebswirtschaftlichen Aspekten implementierten PPS-Prozess und nicht an der Produktions- bzw. Kunststoffverarbeitungsmaschine bzw. dem hierdurch produzierten Produkt.

Dies hat zur Folge dass nur eine eingeschränkte Automatisierung derartiger Herstellungsprozesse möglich ist und schlussendlich ein regulierender oder korrigierender Eingriff des Menschen in die Produktionsplanung und -steuerung immer wieder nötig wird.

Insbesondere für Lohn-Hersteller von Kunststoffprodukten im Spritzguss- oder Extrusionsverfahren sind derartige Zustände jedoch unerwünscht.

Aufgabe der vorliegenden Erfindung ist es deshalb, eine Vorrichtung zur Verarbeitung von Kunststoffen zur Verfügung zu stellen, welche die Nachteile des Standes der Technik überwindet und insbesondere eine im wesentlichen vollständige Automatisierung der Herstellung von Kunststoffprodukten unter Berücksichtigung wesentlicher betrieblichen Abläufe ermöglicht.

Die erfindungsgemäße Aufgabe wird durch eine Vorrichtung zur Verarbeitung von Kunststoffen mit den Merkmalen gemäß Anspruch 1 sowie durch eine Maschineneinheit mit den Merkmalen gemäß Anspruch 13 gelöst. Bevorzugte Ausführungsformen der vorliegenden Erfindung sind Gegenstand der Unteransprüche.

Demnach weist eine erfindungsgemäße Vorrichtung zur Verarbeitung von Kunststoffen (Kunststoffverarbeitungsmaschine), insbesondere eine Extrusions- oder Spritzgussmaschine, wenigstens eine Materialzuführungseinrichtung, wenigstens eine Plastifiziereinheit, wenigstens eine Mikroprozessor-gesteuerte Steuerungseinrichtung zur Steuerung der Materialzuführungseinrichtung, der Plastifiziereinheit und/oder der Formgebungseinrichtung sowie erste und zweite Aufzeichnungsmittel auf. Durch die Materialzuführungseinrichtung wird der Plastifiziereinheit dabei der zu verarbeitende Kunststoff als Rohmaterial zugeführt und durch die Plastifiziereinheit durch den Eintrag von mechanischer und/oder thermischer Energie plastifiziert und/oder homogenisiert. Hiernach wird das durch die Plastifiziereinheit plastifizierte und/oder homogenisierte Material durch die Formgebungseinrichtung einem Formgebungsprozess unterzogen, wodurch ein Kunststoffprodukt, insbesondere ein Zwischen- oder Endprodukt, geformt wird. Das Kunststoffprodukt wird nach einer vorgegebenen Abkühl- und/oder Aushärtezeit der Formgebungseinrichtung entnommen, insbesondere entformt, und/oder einem weiteren Bearbeitungsschritt zugeführt.

Bei der erfindungsgemäßen Vorrichtung sind die ersten Aufzeichnungsmittel an der Materialzuführungseinrichtung vorgesehen und mit der Steuerungseinrichtung über eine Verbindung zur Übermittlung von Daten verbunden. Die ersten Aufzeichnungsmittel zeichnen dabei den Rohmaterialvorrat und/oder die Änderung des Rohmaterialvorrats in der Materialzuführungseinrichtung auf und übermitteln diese Informationen an die Steuerungseinrichtung. Die zweiten Aufzeichnungsmittel sind bei der erfindungsgemäßen Vorrichtung an der Formgebungseinrichtung und/oder der Plastifiziereinheit vorgesehen und ebenfalls mit der Steuerungseinrichtung über eine Verbindung zur Übermittlung von Daten verbunden. Die zweiten Aufzeichnungsntittel dienen dabei der Aufzeichnung von Prozess- und/oder Materialparametern des plastifizierten und/oder homogenisierten Materials bzw. des durch den Formgebungsprozess hergestellten Produktes und übermitteln die aufgezeichneten Informationen ebenfalls an die Steuerungseinrichtung.

Die Steuerungseinrichtung der erfindungsgemäßen Vorrichtung weist Auswertungsmittel auf, welche aus den von den ersten und/oder zweiten Aufzeichnungsmitteln erhaltenen Daten im wesentlichen in Echtzeit den zu erwartenden Rohmaterialbedarf, die zu erwartende Produktionsdauer und/oder die zu erwartenden Gestehungskosten für eine vorgegebene Menge des Produktes oder andere, für die Produktionsplanung und -steuerung relevante Informationen bestimmen.

Bei einer bevorzugten Ausführungsform der vorliegenden Erfindung bestimmen die Auswertungsmittel der Steuerungseinrichtung aus den durch die zweiten Aufzeichnungsmittel erhaltenen Informationen im wesentlichen in Echtzeit die Fehlerwahrscheinlichkeit, die Fehlerhäufigkeit und/oder einen Qualitätswert des Produktes, wobei vorzugsweise diese Informationen bei der Bestimmung des zu erwartenden Rohmaterialbedarfs, der zu erwartenden Produktionsdauer und/oder der zu erwartenden Gestehungskosten für eine vorgegebene Menge des Produktes oder anderer, für die Produktionsplanung und -steuerung relevanter Informationen berücksichtigt werden.

Hierdurch wird zum einen eine kontinuierliche Überwachung der Qualität der gefertigten Produkte ermöglicht, und zum anderen die Einbeziehung einer Veränderung der Fehlerhäufigkeit und/oder des Qualitätswertes und eine hieraus möglicherweise resultierende erhöhte bzw. verringerte Ausschussproduktion in die Produktionsplanung und -steuerung des jeweiligen Produktes und/oder nachfolgender Produkte ermöglicht.

Besonders bevorzugt paßt die Steuerungseinrichtung durch Anpassungsmittel auf der Basis der ermittelten Fehlerwahrscheinlichkeit, der ermittelten Fehlerhäufigkeit und/oder des ermittelten Qualitätswertes die Parameter zur Steuerung der Materialzuführungseinrichtung, der Plastifiziereinheit und/oder der Formgebungseinrichtung und insbesondere die Prozessparameter automatisiert an um so den Qualitätswert des Produktes zu erhöhen bzw. die Fehlerhäufigkeit oder die Fehlerwahrscheinlichkeit des Produktes zu verringern und so die Produktionsplanung und - steuerung des jeweiligen Produktes und/oder nachfolgender Produkte zu optimieren.

Bei einer weiteren bevorzugen Ausführungsform der vorliegenden Erfindung sind dritte Aufzeichnungsmittel vorgesehen, durch welche die Steuerungseinrichtung Maschinenstillstandszeiten, insbesondere Rüstzeiten und Wartungszeiten, Werkzeugabnutztung und Werkzeugstandzeiten, Maschinen- und/oder Werkzeugfehler, Energieverbrauch, Kühlmittelverbrauch und dergleichen aufzeichnet. Besonders bevorzugt werden die durch die dritten Aufzeichnungsmittel aufgezeichneten Informationen bei der Bestimmung des zu erwartenden Rohmaterialbedarfs, der zu erwartenden Produktionsdauer und/oder der zu erwartenden Gestehungskosten für eine vorgegebene Menge des Produktes oder anderer, für die Produktionsplanung und - steuerung relevanter Informationen berücksichtigt.

Hierdurch wird es ermöglicht, dass beispielsweise Fehler der Maschine oder des jeweils benutzten Werkzeuges oder Rüst bzw. Wartungszeiten in die Produktionsplanung und -steuerung des jeweiligen Produktes und/oder der Nachfolgeprodukte mit einbezogen und berücksichtigt werden können, so dass auch hierdurch eine erhöhte Zuverlässigkeit der Produktionsplanung und -steuerung bei der erfindungsgemä-βen Vorrichtung ermöglicht wird.

Bei einer besonders bevorzugten Ausführungsform der erfindungsgemäßen Vorrichtung ist die Steuerungseinrichtung mit einem Datennetz, insbesondere einem Intranet oder dem Internet beispielsweise über eine Kabel-, Glasfaser- oder Funkverbindung verbunden. Über das Datennetz werden durch die Steuerungseinrichtung Datendienste zur Verfügung gestellt, welche aus einer Gruppe ausgewählt sind, die Web-Serverdienste (World Wide Web), FTP-Serverdienste <File-Transfer-Protocol), SQL-Serverdienste (Structured Query Language), E-mail-Dienste, Applikations-Serverdienste wie z. B. J2EE-Dienste oder .net-Dienste, File-Serverdienste wie z. B. Web-DAV (Web based distributed authoring and versioning), SMB-(Server Message Block), NFS-(Network File System) oder AFP-(Apple talk filing protocol)-Serverdienste und dergleichen enthält.

Ebenso wie durch die Steuerungseinrichtung entsprechende Datendienste im Netzwerk zur Verfügung gestellt werden, ist bei einer weiteren bevorzugten Ausführungsform der vorliegenden Erfindung auch die Möglichkeit vorgesehen, die Steuerungseinrichtung so auszuführen, dass sie als Endgerät (Client) für derartige Datendienste dient.

Besonders bevorzugt werden durch die Steuerungseinrichtung mittels der Datendienste im Datennetz die durch die ersten, zweiten und/oder dritten Aufzeichnungsmittel und/oder die durch die Steuerungseinrichtung aufgezeichneten bzw. bestimmten Informationen, insbesondere der zu erwartende Rohmaterialbedarf, die zu erwartende Produktionsdauer und/oder die zu erwartenden Gestehungskosten für eine vorgegebene Menge eines Produktes und/oder andere aus den aufgezeichneten und/oder bestimmten Informationen ableitbare Informationen über das Produkt, den Produktionsablauf und/oder die Produktionsplanung zur Verfügung gestellt.

Über das Datennetz und die entsprechenden Datendienste, welche vorzugsweise von Datendienstmitteln der Steuerungseinrichtung im Datennetz zur Verfügung gestellt werden, ist somit ein Abrufen beispielsweise von Informationen, welche Auskunft geben über den Stand des Produktionsprozesses eines bestimmten Produktes bzw. dessen voraussichtliches Produktionsende, dessen präzise Gestehungskosten, den noch nötigen Rohmaterialbedarf, und gegebenenfalls Informationen, welche für die Qualitätssicherung des Produktes relevant sein können, möglich. Insbesondere ist ein Abrufen derartiger Informationen über den Web- oder XML-Server-Service oder aber den Applikationsserver-Service, auf welche über das Datennetz, beispielsweise über das Internet von außerhalb zugegriffen werden kann, möglich. Besonders vorteilhaft ist dabei, dass beispielsweise im Falle eines Lohnspritzgussherstellers der Kunde beispielsweise über einen speziell für diesen eingerichteten Zugang sich selbst und kontinuierlich über den Stand der Produktion der von ihm bestellten Produkte und beispielsweise das voraussichtliche Produktionsende bzw. den voraussichtlichen Produktionstermin und damit die genaue Verfügbarkeit der Produkte informieren kann.

Bei einer besonders bevorzugten Ausführungsform der vorliegenden Erfindung weist die Steuerungseinrichtung Mittel auf, durch die besonders bevorzugt über das Datennetz, beispielsweise per e-mail oder dergleichen nach der Fertigstellung einer vorgegebenen Menge eines Produktes oder aber für den Termin der zu erwartenden Fertigstellung einer vorgegebenen Produktmenge, welcher durch die Auswertungsmittel der Steuerungseinrichtung in Echtzeit bestimmt wurde, die Verpackung, der Versand und/oder die Erstellung bzw. der Versand von Fakturadokumenten wie beispielsweise Frachtdokumenten, Lieferscheinen bzw. Rechnungen automatisiert veranlasst werden, so dass beispielsweise zum Zeitpunkt der Fertigstellung eines Produktes eine entsprechende Produktverpackung bereits bereit steht bzw. durch den Frachtführer bereitgestellt wird und somit ein Versand der Produkte unmittelbar nach der Fertigstellung und ohne weitere Zeitverzögerung erfolgen kann.

Ein derartiges Vorgehen erweist sich insbesondere zur Minimierung der Fracht- und Lagerkosten als besonders vorteilhaft, da durch eine erfindungsgemäße Vorrichtung der Frachtführer für die betreffenden Produkte über den genauen Zeitpunkt der Fertigstellung des Produktes bzw. des zur Verfügung stehens des verpackten Produktes informiert werden kann, so dass unerwünschte Lager- bzw. Wartezeiten vermieden werden können.

Bei einer weiteren vorteilhaften Ausführungsform der vorliegenden Erfindung weist die Steuerungeinrichtung Mittel auf, durch welche aufgrund der von der Steuerungseinrichtung erhaltenen bzw. aufgezeichneten und/oder bestimmten Informationen über Betriebszeiten, Standzeiten und/oder dergleichen Termine für Maschinenumrüstungen, Wartungsarbeiten oder dergleichen automatisiert bestimmt bzw. bei der Produktionsplanung und -Steuerung berücksichtigt und die Umrüstung oder Wartung der Maschine bzw. der Werkzeuge zu dem entsprechenden Termin veranlasst werden. Besonders bevorzugt wird dabei von der Steuerungseinrichtung auch die Information über die Fehlerhäufigkeit bzw. Fehlerwahrscheinlichkeit bzw. die Informationen über den zu erwartenden Fertigstellungstermin des Produktes und dergleichen verwendet, um insbesondere Termine für Wartungs- und/oder Servicearbeiten so einzurichten, dass diese mit der Produktion besonders wenig kollidieren bzw. in den zeitlichen Ablauf oder die Produktionsplanung besonders wenig eingreifen.

Bei einer weiteren besonders bevorzugten Ausführungsform der vorliegenden Erfindung weist die Steuerungseinrichtung Mittel auf, welche auf der Basis der durch die erste, zweite und/oder dritte Aufzeichnungseinrichtung aufgezeichneten und/oder der durch die Steuerungseinrichtung aufgezeichneten und/oder bestimmten Informationen eine Bestellung bzw. Nachbestellung und Lieferung von Rohmaterial veranlassen, wobei dies insbesondere unter Berücksichtigung von Rohmaterialspezifikationen, Rohmateriallieferzeiten bzw. -lieferterminen oder -verfügbarkeiten erfolgt. Bevorzugt erfolgt diese Bestellung durch die Steuerungseinrichtung über das Datennetz und besonders bevorzugt über das Internet.

Besonders bevorzugt weist die Steuerungseinrichtung außerdem Mittel auf, welche- über das Datennetz Rohmaterialspezifikationen, Rohmaterialverfügbarkeit, Rohmaterialpreis und/oder dergleichen wenigstens eines Rohmateriallieferanten ermitteln und gegebenenfalls aus einer Mehrzahl von Lieferanten einen Rohmateriallieferanten beispielsweise aufgrund eines vergünstigten Rohmaterialpreises, günstiger Lieferbedingungen bzw. verbesserter Rohmaterialspezifikationen automatisiert auswählen. Vorzugsweise erfolgt die Bestellung des Rohmaterials dann bei dem aus einer Mehrzahl von Rohmateriallieferanten ausgewählten Lieferanten.

Bevorzugt führt bzw. speichert die Steuerungseinrichtung auch Informationen über die Zuverlässigkeit eines oder mehrerer Rohmateriallieferanten bzw. deren Materialqualität etc. und insbesondere deren termintreue Lieferung und bezieht diese Informationen in die automatisierte Auswahl eines Rohmateriallieferanten aus einer Mehrzahl von Lieferanten ein.

Bei einer weiteren besonders bevorzugten Ausführungsform der vorliegenden Erfindung besteht die Möglichkeit, auf die durch die Steuerungseinrichtung im Datennetz zur Verfügung gestellten Datendienste über das Datennetz beispielsweise mittels eines Datendienstendgerätes (Client) zuzugreifen und die Parameter eines Herstellungsprozesses, die vorgegebene Menge eines Produktes, Rohmaterialvorgaben für ein Produkt, einen Mindest-Qualitätswert eines Produktes, einen Dringlichkeitswert und insbesondere eine Lieferterminvorgabe für ein Produkt sowie Werkzeug- bzw. Maschinenwartungsintervalle und/oder dergleichen zu verändern. Auf diese Weise ist es sowohl für den Hersteller als auch für einen Kunden beispielsweise eines Lohnspritzgussherstellers möglich, auf die Produktion und insbesondere geänderte Anforderungen an die Produktionsmenge, den Liefertermin, die Produktqualität bzw. gewisse Produkteigenschaften vor und/oder während der Produktion Einfluss zu nehmen und insbesondere die Dringlichkeit der Produktion eines Produktes herauf- oder herabzusetzen, je nachdem ob eine frühere oder spätere Lieferung des Produktes gewünscht wird.

Insbesondere können beispielsweise durch die Vorgaben eines Kunden gewisse Produkteigenschaften wie z. B. die Produktfarbe, die Kunststoffelastizität etc. angepasst werden, wodurch die Steuerungseinrichtung - wiederum automatisiert - dann eine entsprechende Änderung der Bestellung von Rohmaterial, vorzugsweise unter Berücksichtigung von geänderten Materialspezifikationen, Materialpreisen und/oder Lieferterminen verschiedener Rohmateriallieferanten automatisiert veranlassen und diese in die Produktion mit einfließen lassen kann.

Es ist außerdem im Sinne der vorliegenden Erfindung, dass die Steuerungseinrichtung Mittel aufweist, welche auf der Basis von beispielsweise durch Kunden mittels Datendienstendgeräten (Clients) über das Datennetz an die Steuerungseinrichtung übermittelte Informationen und/oder Anforderungsprofile automatisiert Produktionsangebote bzw. Auftragsbestätigungen und gegebenenfalls vorläufige Liefertermine oder dergleichen erstellen bzw. ermitteln und diese dem Kunden über das Datennetz bzw. die im Datennetz zur Verfügung gestellten Datendienste und insbesondere den Web- bzw. XML-Server-Dienst, den Applikationsserverdienst oder aber den e-mail-Dienst übermitteln. Bevorzugt erlaubt die eifindungsgemäße Vorrichtung auch eine Bestellung von Produkten beispielsweise auf der Grundlage derartiger Produktionsangebote über die im Datennetz zur Verfügung gestellten Datendienste und ermöglicht auch die Integration weiterer betriebswirtschaftlicher Prozesse in das in der Steuerungseinrichtung implementierte Produktionsplanungs- und Steuerungs-System, auf das über das Datennetz zugegriffen und mit diesem kommuniziert werden kann.

Bei einer weiteren bevorzugten Ausführungsform der vorliegenden Erfindung ist die Steuerungseinrichtung mit einem Eingabe- bzw. Lesegerät für personenbezogene Daten verbunden, insbesondere einem Magnet- und/oder Chipkartenlesegerät oder aber einer Vorrichtung zur Erfassung biometrischer Daten wie z. B. Fingerabdrücke, Handabdrücke bzw. Gesichtserkennungssystemen, durch welche sich autorisiertes Personal, wie z.B. Umrüst- oder Wartungsarbeiter an der jeweiligen Kunststoffverarbeitungsmaschine authentifizieren bzw. sich bei dieser an- oder abmelden kann, beispielsweise um Umrüst- bzw. Wartungsarbeiten an der Kunststoffverarbeitungsmaschine vorzunehmen.

Auf diese Weise ist es auch möglich, eine Vorrichtung zur Verarbeitung von Kunststoffen bereitzustellen, welche abgesehen von diesen Authentifizierungsmöglichkeiten keinerlei Möglichkeit für einen unmittelbaren menschlichen Eingriff bietet bzw. diesen erlaubt, es sei denn dass sich die eingreifende Person bei der Maschine authentifiziert und hierdurch ein Rüst- und/oder Wartungsintervall auslöst.

Durch die erfindungsgemäße Kunststoffverarbeitungsmaschine wird somit auch eine Aufzeichnung von Personaldaten und im weitesten Sinne auch eine Integration des Personalwesens in die Steuerungseinrichtung der erfindungsgemäßen Kunststoffverarbeitungsmaschine ermöglicht. Derartige Personalinformationen können von der Steuerungseinrichtung wiederum bei der Auswertung der erhaltenen Informationen insbesondere bei der Bestimmung der Restdauer der Produktion einer vorgegebenen Menge eines Produktes bzw. bei der Ermittlung der Gestehungskosten mit einbezogen werden.

Bei einer weiteren bevorzugten Ausführungsform der vorliegenden Erfindung werden die von den ersten, zweiten und/oder dritten Aufzeichnungsmitteln erhaltenen Informationen und/oder die von der Steuerungseinrichtung aufgezeichneten und/oder bestimmten Informationen sowie gegebenenfalls von Datendienstendgeräten (Clients) erhaltene oder aber von durch die Steuerungseinrichtung über Datendienste zur Verfügung gestellte Informationen in der Steuerungseinrichtung und/oder einer damit verbundenen Speichereinrichtung wie beispielsweise einem Festplattenspeicher, einem Magnetbandspeicher, Flash-Speichern, EEPROM-Speichern (Electrically Erasable Programmable Read-Only Memory), RAM-Speichern (Random Access Memory) oder dergleichen gespeichert.

Durch diese Speicherung ist es möglich, eine lückenlose Dokumentation des betriebswirtschaftlichen Prozesses bzw. des Produktionsprozesses sowie gegebenenfalls hierbei auftretender Probleme durchzuführen und auf dieser Grundlage eine Qualitätskontrolle vom Rohmaterial bis zum fertigen Produkt für jedes einzelne Werkstück zu ermöglichen. Weiterhin wird es durch die Speicherung der durch die Aufzeichnungsmittel erhaltenen bzw. durch die Steuerungseinrichtung erhaltenen oder bestimmten Informationen möglich, Schwierigkeiten oder Fehlerquellen, welche zu einer erhöhten Fehlerhäufigkeit bzw. Fehlerwahrscheinlichkeit oder einem verminderten Qualitätswert geführt haben, über einen längeren Zeitraum vorzuhalten und hierdurch gegebenenfalls bei weiteren Nachfolgeproduktionen eines gleichen oder ähnlichen Produktes eine durch den Kunden selbst veranlaßte Modifikation der Produktionsparameter für Folgeproduktionen vorzunehmen. Insbesondere erlaubt die Speicherung der betriebswirtschaftlichen Informationen, wie beispielsweise von Produktionsangeboten, Bestellungen, Lieferscheinen Rechnungen und anderer Fakturadokumente bzw. -informationen eine Weiterverarbeitung dieser Informationen beispielsweise zur Erstellung von Betriebsabschlüssen oder dergleichen.

Bei der erfindungsgemäßen Kunststoffverarbeitungsmaschine wird somit die gesamte Prozesskette Materialwirtschaft, Logistik, Personal, Finanzen und Controlling durch die Integration der Module Materialwirtschaft, Finanzen, Logistik, Controlling und Personalwesen eines klassischen PPS-Systems in die Produktionsmaschine in dieser abgebildet, wodurch Prozess-Zeitdaten und -kosten entstehungsnäher und exakter als bei herkömmlichen PPS/BDE-Systemen erfasst werden. Die erfindungsgemäße Kunststoffverarbeitungsvorrichtung erlaubt daher auf überraschende Weise und unter Berücksichtigung aller relevanten Parameter, die genauen Gestehungskosten (Ist-Kosten) für die Produktion von Kunststoffartikeln zu bestimmen und diese beispielsweise für eine spätere Auswertung zu protokollieren.

Die vorliegende Erfindung betrifft weiterhin eine Maschineneinheit, bei welcher über ein Datennetz, insbesondere ein Intranet oder das Internet die Steuerungseinrichtungen wenigstens zweier Vorrichtungen zur Verarbeitung von Kunststoff gemäß der vorliegenden Erfindung, insbesondere Extrusions- oder Spritzgussmaschinen miteinander verbunden sind, wobei eine Steuerungseinrichtung einer ersten Vorrichtung zur Verarbeitung von Kunststoffen als zentrale Steuerungseinheit (Master) für die Steuerungseinrichtungen weiterer Vorrichtungen zur Verarbeitung von Kunststoffen (Slaves) dient und wobei die durch die ersten, zweiten und/oder dritten Aufzeichnungsmittel aller Vorrichtungen zur Verarbeitung von Kunststoff aufgezeichneten Informationen und/oder die durch die Steuerungseinrichtungen der Slaves aufgezeichneten und/oder bestimmten Informationen an den Master übermittelt werden, wobei der Master die durch ihn aufgezeichneten und/oder bestimmten Informationen und/oder die von den Slaves erhaltenen Informationen kombiniert, insbesondere miteinander verrechnet und hieraus im wesentlichen in Echtzeit den zu erwartenden Rohmaterialbedarf, die zu erwartende Produktionsdauer und/oder die zu erwartenden Gestehungskosten für eine vorgegebene Menge des Produktes oder dergleichen für die Maschineneinheit bestimmt.

Als Maschineneinheit im Sinne der vorliegenden Erfindung sind dabei wenigstens zwei Vorrichtungen zur Verarbeitung von Kunststoffen bezeichnet, welche an ein und demselben Standort oder aber an verschiedenen Standorten vorgesehen sind.

Gemäß einer weiteren bevorzugten Ausführungsform einer erfindungsgemäßen Maschineneinheit weist der Master zweite Anpassungsmittel auf, durch welche über das Datennetz eine Steuerung der Parameter der Produktion bzw. des Produktionsprozesses, der vorgegebenen Menge des Produktes, der Rohmaterialvorgaben für das Produkt, eines Mindestqualitätswertes des Produktes, der Werkzeug- bzw. Maschinenwartungsintervalle und/oder dergleichen der Slaves bzw. der diesen zugeordneten Kunststoffverarbeitungsmaschinen erfolgt.

Eine Maschineneinheit gemäß der vorliegenden Erfindung erlaubt es, die Produktionsplanung und -steuerung einer Vielzahl von Vorrichtungen zur Verarbeitung von Kunststoffen durch eine zentrale Steuerungseinrichtung im wesentlichen automatisiert zu steuern. Insbesondere wird dadurch ermöglicht, dass Kunststoffverarbeitungsvorrichtungen an verschiedenen Standorten beispielsweise zur Herstellung ein und desselben Produktes nach Bedarf eingesetzt werden und insbesondere für den Fall eines Ausfalls einer Kunststoffverarbeitungsmaschine an einem Standort die Produktionskapazität der ausgefallenen Maschine durch eine andere Kunststoffverarbeitungsvorrichtung der Maschineneinheit ersetzt oder aber durch eine entsprechend verlängerte Produktionsdauer anderer Kunststoffverarbeitungsmaschinen der Maschineneinheit kompensiert wird.

Bei einer erfindungsgemäßen Maschineneinheit ist es insbesondere möglich, dass zwar zentrale Produktionsplanungs- und -steuerungsprozesse durch den Master erfolgen, jedoch beispielsweise die Rohmaterialvorratsbestimmung bzw. -haltung und/oder Bestellung bzw. Lieferung durch die jeweiligen Slaves koordiniert mit der Produktionsplanung und -steuerung des Masters erfolgen. Insbesondere ist hierdurch auch eine Anpassung der Produktionsparameter einzelner Slaves dahingehend möglich, dass beispielsweise lediglich einzelne Kunststoffverarbeitungsvorrichtungen der Maschineneinheit durch geänderte Produktionsparameter entsprechend modifizierte Produkte mit geänderten Produkteigenschaften wie z. B. einer geänderten Produktfarbe oder aber einer geänderten Fehlerhäufigkeit bzw. -wahrscheinlichkeit produzieren, wohingegen die Produkte anderer Kunststoffverarbeitungsvorrichtungen der Maschineneinheit Produkte mit den ursprünglich festgelegten Produktparametern bzw. auf der Grundlage der ursprünglich vorgesehenen Produktmenge weiter produziert werden.

Besonders bevorzugt findet eine Kommunikation eines Datendienstendgerätes (Client) mit dem Master der Maschineneinheit statt, so dass beispielsweise ein Kunde eines Lohnspritzgussherstellers oder aber der Hersteller selbst vor oder während der Produktion die Menge eines zu produzierenden Produktes erhöhen bzw. erniedrigen kann oder aber Dringlichkeiten und/oder Lieferterminvorgaben für eine Produktion vorgeben bzw. verändern kann wodurch durch den Master eine bedarfsweise Veränderung der Produktionen bzw. Produktionsparameter der Slaves automatisiert angepasst und damit die Produktion entsprechend verändert werden kann. Insbesondere erhält der auf die Datendienste des Masters bzw. einer Steuerungseinrichtung einer Kunststoffverarbeitungsvorrichtung zugreifende Endbenutzer (Client) durch die im wesentlichen in Echtzeit erfolgende Bestimmung der Produktionsparameter bzw. der voraussichtlichen Restdauer der Produktion einer vorgegebenen Menge eines Produktes im wesentlichen zeitgleich mit der Eingabe geänderter Produktparameter, Produktmengen oder dergleichen eine entsprechend angepasste Information darüber, welche Auswirkungen hinsichtlich der Restdauer der Produktion, der Produktqualität, der Gestehungskosten bzw. des zu erwartenden Rohmaterialbedarfs bestehen.

Ganz allgemein ist es im Sinne der vorliegenden Erfindung, dass die bezüglich einer erfindungsgemäßen Vorrichtung zur Verarbeitung von Kunststoffen beschriebenen Funktionen einer einzelnen Kunststoffverarbeitungsvorrichtung ebenso im Rahmen einer erfindungsgemäßen Maschineneinheit implementiert werden können und hierdurch eine zentralisierte Produktionsplanung und -steuerung im wesentlichen automatisiert und im Dialog mit dem Kunden über das Datennetz und die durch die Steuerungseinrichtung bzw. den Master zur Verfügung gestellten Datendienste sowie ohne die Notwendigkeit eines Eingriffs durch den Hersteller erfolgen kann.

Bei der Vorrichtung zur Verarbeitung von Kunststoffen bzw. der Maschineneinheit gemäß der vorliegenden Erfindung wird es auf einfache Weise möglich, eine vollautomatisierte Produktion von Kunststoffartikeln zu realisieren, welche lediglich für den Fall einer Umrüstung bzw. einer Wartung eines menschlichen Eingriffes bedarf. Rohmaterialvorratshaltung sowie Verpackung und Versand, die Erstellung von Versanddokumenten und Rechnungen erfolgen durch die Steuerungseinrichtung einer eifindungsgemäßen Vorrichtung und/oder den Master einer Maschineneinheit gemäß der vorliegenden Erfindung vollautomatisiert und bedürfen keiner weiteren Eingriffe durch den Maschinenbetreiber bzw. den Hersteller.

Weitere Merkmale der erfindungsgemäßen Vorrichtung zur Verarbeitung von Kunststoffen ergeben sich aus der nachfolgenden detaillierten Beschreibung in Verbindung mit den Ansprüchen und den Figuren. Es zeigt:
- Fig. 1: eine schematische Darstellung einer erfindungsgemäßen Vorrichtung zum Verarbeiten von Kunststoffen;
- Fig. 2: eine schematische Darstellung einer Maschineneinheit gemäß der vorliegenden Erfindung.

Nachfolgend sei eine erfindungsgemäße Kunststoffverarbeitungsmaschine am Beispiel einer Spritzgußmaschine beschrieben. Es sei jedoch ausdrücklich darauf hingewiesen, daß die beschriebenen Merkmale und Funktionen in analoger Weise auch auf Extrusionsmaschinen oder andere kunststoffverarbeitende Maschinen übertragbar sind.

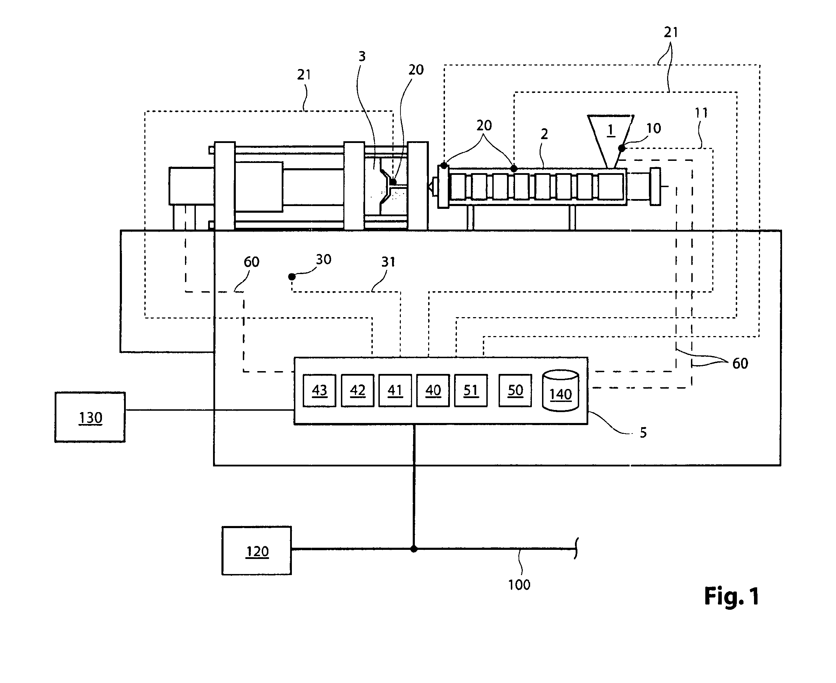

Fig. 1 zeigt eine erfindungsgemäße Spritzgußmaschine, welche eine Materialzuführungseinrichtung 1 aufweist, durch die einer Plastifiziereinheit 2 das zu verarbeitende Rohmaterial zugeführt wird. Weiterhin weist die erfindungsgemäße Produktionsmaschine eine Formgebungseinrichtung 3 in Form eines Spritzgußwerkzeugs auf, in welches das durch die Plastifiziereinheit plastifizierte bzw. homogenisierte Material bei geschlossenem Spritzgußwerkzeug unter Druck eingespritzt wird und aus welchem das Werkstück nach einer vorgegebenen Abkühl- bzw. Aushärtezeit durch Öffnen des Spritzgußwerkzeuges entformt wird. Die Maschine weist weiterhin eine Steuerungseinrichtung 5 auf, welche über Steuer-ungsleitungen 60 mit der Plastifiziereinheit 2, der Materialzuführungseinrichtung 1 und der Formgebungseinrichtung 3 und insbesondere mit dem Aggregat zum Öffnen/Schließen des Spritzgußwerkzeuges, verbunden ist. Durch die Steuerungsleitungen 60 werden die Steuerungsbefehle der Steuerungseinrichtung 5 an die entsprechenden Komponenten übermittelt.

Gemäß Fig. 1 weist die erfindungsgemäße Spritzgußmaschine außerdem erste Aufzeichnungsmittel 10 auf, welche an der Materialzuführungseinrichtung 1 angeordnet sind und welche über die Verbindungsleitung 11 zur Übermittlung von Daten mit der Steuerungseinrichtung 5 derart verbunden sind, dass Informationen der ersten Aufzeichnungsmittel 10 über den Rohmaterialvorrat bzw. die Änderung des Rohmaterialvorrats, insbesondere in Abhängigkeit der Zeit, an die Steuerungseinrichtung 5 übermittelt werden.

Die gezeigte Spritzgußmaschine weist an der Plastifiziereinheit 2 und insbesondere an deren Düse sowie am Spritzwerkzeug selbst zweite Aufzeichnungsmittel 20 auf, welche mit der Steuerungseinrichtung 5 über Verbindungsleitungen 21 zur Übermittlung von Daten derart verbunden sind, dass eine Übermittlung von Informationen über das plastifizierte bzw. homogenisierte Material bzw. über das nach dem Einspritzen im Spritzwerkzeug befindliche Material an die Steuerungseinrichtung 5 übermittelt werden. Hierbei handelt es sich insbesondere um Zustandsinformationen des Materials, wie beispielsweise Materialtemperatur, Materialviskosität, Materialhomogenität, Materialdruck oder dergleichen.

Die erfindungsgemäße Spritzgußmaschine weist weiterhin dritte Aufzeichnungsmittel 30 auf, welche mit der Steuerungseinrichtung 5 über eine Verbindungsleitung 31 zur Übermittlung von Daten verbunden sind und durch welche von den Aufzeichnungsniitteln 30 aufgezeichnete Informationen beispielsweise über den Betriebszustands der Maschine, den momentanen Energiebedarf, die benötigte bzw. zur verfügung gestellte Kühlleistung und dergleichen an die Steuerungseinrichtung 5 übermittelt werden.

Wie in Fig. 1 erkennbar ist, ist die Steuerungseinrichtung 5 besonders bevorzugt in die Spritzgußmaschine integriert, beispielsweise in die Basis der Spritzgußmaschine oder aber in einen in die Produktionsmaschine integrierten Schaltschrank.

Die Steuerungseinrichtung 5 weist Auswertungsmittel 50 auf, welche die über die Verbindungsleitungen 11, 21 und 31 von den ersten, zweiten und/oder dritten Aufzeichnungsmitteln 10, 20, 30 erhaltenen Informationen im wesentlichen in Echtzeit auswerten und hieraus den zu erwartenden Rohmaterialbedarf, die zu erwartende Produktionsdauer und/oder die zu erwartenden Gestehungskosten des Produktes oder dergleichen ähnliche Informationen, wie z.B. Informationen über den Produktionsablauf oder den Stand der Produktion bestimmt.

Die Auswertungsmittel 50 der Steuerungseinrichtung 5 bestimmen zudem aus den von den zweiten Aufzeichnungsmitteln 20 über die Verbindungsleitungen 21 erhaltenen Informationen im wesentlichen in Echtzeit die Fehlerhäufigkeit bzw. die Fehlerwahrscheinlichkeit und/oder einen Qualitätswert des Produktes. Aufgrund des Qualitätswertes bzw. der Fehlerhäufigkeit oder -wahrscheinlichkeit werden durch Anpassungsmittel 51 der Steuerungseinrichtung 5 die Parameter bzw. die Befehle zur Steuerung der Materialzufiihnungseinrichtung 1, der Plastifiziereinheit 2 und/oder der Formgebungseinrichtung 3, wie z.B. das Schneckendrehmoment, der Schneckenvorschub, die Öffnungs-/Schließzeit bzw. die Abkühl- bzw. Aushärtezeit des Spritzgusswerkzeugs, angepaßt, um eine Erhöhung des Qualitätswertes oder aber eine Verringerung der Fehlerhäufigkeit bzw. Fehlerwahrscheinlichkeit zu bewirken.

Die Steuerungseinrichtung 5 der Spritzgußmaschine gemäß Fig. 1 ist weiterhin mit einem Eingabe- bzw. Lesegerät 130 verbunden, insbesondere zum Lesen von personenbezogenen Daten, mit welchen eine An-/Abmeldung bzw. eine Registrierung und/oder Authentifizierung von Personal, beispielsweise Schichtpersonal, Rüst- oder Wartungspersonal bei der Spritzgußmaschine bzw. deren Steuerungseinrichtung 5 möglich ist. Die durch das Eingabe- bzw. Lesegerät 130 an die Steuerungseinrichtung 5 übermittelten Daten werden ebenso wie alle anderen von der Steuerungseinrichtung 5 erhaltenen Informationen bei der Ermittlung des zu erwartenden Rohmaterialbedarfs, der zu erwartenden Produktionsdauer und/oder der zu erwartenden Gestehungskosten des Produktes oder dergleichen ähnliche Informationen, welche die Produktionsplanung und -steuerung des Produktes und/oder eines Nachfolgeproduktes betreffen, berücksichtigt.

Die Steuerungseinrichtung 5 der Spritzgußmaschine gemäß Fig. 1 ist zudem mit einem Datennetz 100 verbunden, welches einerseits mit einem Datendienstendgerät 120 verbunden ist und andererseits beispielsweise mit weiteren Steuerungseinrichtungen weiterer Kunststoffverarbeitungsmaschinen oder aber über eine entsprechende Schnittstelle mit einem entfernten Netzwerk (Wide Area Network - WAN) oder aber dem Internet verbunden sein kann.

Die Steuerungseinrichtung 5 stellt in dem Datennetz, vorzugsweise mittels Datendienstmitteln, Datendienste zur Verfügung, wie z.B. einen Applikationsserverdienst, einen SQL-Serverdienst, einen Webserverdienst und/oder E-mail-Dienste, durch welche eine Kommunikation zwischen dem Datendienstendgerät (Client) 120, welches auf diese Datendienste zugreift, und der Steuerungseinrichtung 5 möglich ist. Zur Übertragung der Informationen in dem Datennetz werden dabei besonders bevorzugt standardisierte Datenübertragungsprotokolle, wie beispielsweise TCP/IP, IPX, NetBEUI, AppleTalk oder dergleichen verwendet. Beispielsweise können hierdurch mittels des Clients die Produktionsparameter der laufenden Produktion der Spritzgußmaschine betrachtet und gegebenenfalls geändert werden, um manuell auf Parameter, wie beispielsweise das Schneckendrehmoment, die Abk-ühl- bzw. Aushänezeit, Rohmaterialvorgaben und/oder dergleichen Einfluß zu nehmen.

Besonders bevorzugt werden über die Datendienste die von den Auswertungsmitteln 51 bestimmten Informationen, wie z.B. die zu erwartende Produktionsdauer, Gestehungskosten oder dergleichen, aber auch weitere Informationen, wie beispielsweise Angebotsinformationen, Lieferinformationen, Buchhaltungsinformationen, Informationen über Personal oder dergleichen, zur Verfügung gestellt.

Die Steuerungseinrichtung 5 weist weiterhin Mittel 40 auf, welche über das Datennetz und bevorzugt über die Datendienste, wie z.B. E-mail, FTP, SQL oder mittels Java-Applets nach der Fertigstellung einer vorgegebenen Menge eines Produktes oder aber für den Termin der zu erwartenden Fertigstellung die Verpackung bzw. den Versand und/oder aber die Erstellung von Versand-, Liefer-, Rechnungs- oder Fakturadokumenten automatisiert veranlassen. Beispielsweise wird per E-mail für den Termin der zu erwartenden Fertigstellung eines Produktes bei einem Frachtuntemehmen die Bereitstellung einer Versandverpackung beauftragt und die Abholung der zu versendenden Produkte terminiert.

Die Steuerungseinrichtung 5 weist weiterhin Mittel 41 auf, welche über das Datennetz und bevorzugt mittels der Datendienste einen Wartungsdienstleister oder aber Wartungspersonal über die Notwendigkeit einer Wartung, Reparatur oder Umrüstung der Spritzgußmaschine oder des Spritzgusswerkzeuges informieren und hierfür, falls möglich, einen Termin bestimmen, welcher in die laufende Produktion der Spritzgußmaschine möglichst wenig eingreift oder diese möglichst kurz unterbricht. Insbesondere sind die Mittel 41 auch dazu geeignet, für den Fall eines Maschinen- oder Werkzeugdefektes am Datendienstendgerät 120 eine entsprechende Mitteilung über den Defekt zu veranlassen oder aber diese Mitteilung mittels eines Datendienstes einem Wailungsdienstleister oder Wartungspersonal unter Festlegung einer Priorität zu übermitteln.

Die Steuerungseinrichtung 5 weist außerdem Mittel 42 auf, welche in Abhängigkeit von den durch die Steuerungseinrichtung erhaltenen Informationen über den Rohmaterialvorrat bzw. -verbrauch eine automatisierte Bestellung von Rohmaterial, beispielsweise mittels E-mail, FTP, SQL oder eines Java-Applets oder dergleichen, bei einem Rohmateriallieferanten automatisiert veranlaßt, insbesondere unter Berücksichtigung von Lieferzeiten oder Lieferterminen, welche mit der durch die Steuerungseinrichtung durchgeführten Produktionsplanung und -steuerung derart koordiniert sind, dass beispielsweise für die Produktion eines neuen Produktes die hierfür notwendige Rohmaterialbeschaffung termingerecht veranlasst wird.

Insbesondere wird dabei durch Mittel 43 ein Vergleich der Rohmaterialspezifikationen, Rohmaterialverfügbarkeiten und/oder Rohmaterialpreise verschiedener Rohmateriallieferanten, z.B. mittels E-mail, SQL-, Java- oder dergleichen, durchgeführt und das Ergebnis des Vergleichs einer automatisierten Auswahl eines Rohmateriallieferanten aus einer Vielzahl von Rohmateriallieferanten aufgrund von speziellen Rohmaterialspezifikationen oder aufgrund eines Preisvergleichs der Rohmaterialpreise verschiedener Lieferanten oder aber deren Verfügbarkeit zugrundegelegt. Die automatisierte Bestellung des Rohmaterials durch die Mittel 42 erfolgt dann bei dem durch die Mittel 43 ausgewählten Rohmateriallieferanten.

Sowohl die durch die von den ersten, zweiten und dritten Aufzeichnungsmitteln 10, 20, 30 an die Steuerungseinrichtung 5 übermittelten Informationen als auch die durch die Auswertungseinrichtung 51 ermittelten Informationen sowie beispielsweise Informationen über Betriebszustände, Fehler der Plastifiziereinheit oder aber des Spritzgusswerkzeuges, und ebenso vom Datendienstendgerät 120 empfangene Informationen oder aber durch die Steuerungseinrichtung 5 über das Datennetz bzw. die Datendienste zur Verfügung gestellten Informationen werden durch Speichermittel 140, welche in der Steuerungseinrichtung 5 angeordnet sind, gegebenenfalls für ein späteres Auslesen oder aber eine weitere Verarbeitung bzw. Auswertung gespeichert. Insbesondere besteht auch die Möglichkeit, über ein Datendienstendgerät 120 oder aber über das Internet auf die in der Speichereinrichtung 140 gespeicherten Informationen über das Datennetz und beispielsweise den SQL-Datendienst zuzugreifen.

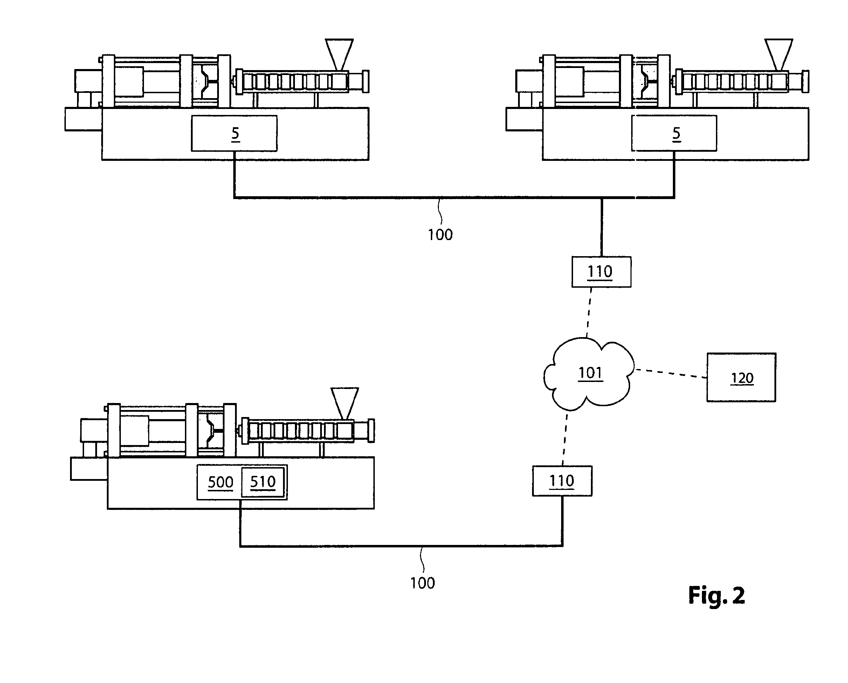

Fig. 2 zeigt eine erfindungsgemäße Maschineneinheit, bei der mehrere Spritzgußmaschinen über ein Datennetz 100 miteinander verbunden sind, wobei die Verbindung des Datennetzes über das Internet 101 erfolgt. Das Datennetz ist dabei über Kommunikationsendgeräte 110, wie beispielsweise Modems, Router, Switches oder dergleichen mit dem Internet 101 verbunden. Besonders bevorzugt wird durch die Kommunikationsendgeräte 110 eine verschlüsselte Verbindung zwischen den Kommunikationsendgeräten 110 über das Internet 101 aufgebaut, so dass die Informationen zwischen den beiden Datennetzsegmenten gegen unbefugten Zugriff geschützt übermittelt werden. Dies erfolgt beispielsweise mittels eines VPN (Virtual Private Network) und insbesondere unter Verwendung von Tunnel-Protokollen, wie beispielsweise PPTP (Point to Point Tunneling Protocoll) oder L2TP (Level 2 Tunneling Protocol).

Gemäß Fig. 2 ist das Datendienstendgerät 120 ebenfalls mit dem Internet 101 verbunden und so eingerichtet, dass über das Internet 101 Informationen aus dem Datennetz 100 vom Datendienstendgerät 120 empfangen werden können oder aber an dieses übermittelt werden können. Das Datendienstendgerät ist hierzu ebenso mit entsprechenden Mitteln zur Verschlüsselung der zu übermittelnden Daten, beispielsweise mittels eines PPTP- oder L2TP-Protokolls, eingerichtet.

Die Steuerungseinrichtung 500 einer Spritzgußmaschine dient bei der Maschineneinheit gemäß Fig. 2 als zentrale Steuereinheit (Master), welche von den Steuerungseinrichtungen 5 der weiteren Vorrichtungen zur Verarbeitung von Kunststoffen (Slaves) die durch deren erste, zweite und/oder dritte Aufzeichnungsmittel 10, 20, 30 aufgezeichneten Informationen sowie durch die Auswertungsmittel 51 bestimmen Informationen übermittelt erhält. Der Master 500 bestimmt hieraus unter Berücksichtigung der von ihm selbst durch die ersten, zweiten und/oder dritten Aufzeichnungsmittel 10, 20, 30 erhaltenen Informationen den zu erwartenden Rohmaterialbedarf, die zu erwartenden Produktionskosten und/oder die zu erwartende Produktionsdauer einer vorgegebenen Menge eines Produktes oder dergleichen ähnliche Informationen, welche für die Produktionsplanung und -steuerung der Maschineneinheit relevant sind.

Die Maschineneinheit gemäß Fig. 2 stellt somit ein abgeschlossenes System dar, welches aus einzelnen Kunststoffverarbeitungsmaschinen zusammengesetzt ist, die in ihrer Gesamtheit, gesteuert durch die zentrale Steuerungseinrichtung 500, funktioniert wie eine einzelne erfindungsgemäße Produktionsmaschine. Die im Rahmen der Beschreibung der Fig. 1 beschriebenen Funktionen der Spritzgußmaschine und insbesondere der Steuemngseinrichtung 5 können somit entsprechend auf die zentrale Steuerungseinrichtung 500 der Maschineneinheit gemäß Fig. 2 angewendet werden.

Insbesondere weist die zentrale Steuerungseinrichtung 500 Anpassungsmittel 510 auf, welche die Parameter des Produktherstellungsprozesses der einzelnen Slaves über das Datennetz 100 steuern und somit eine Produktionsplanung und -steuerung eines komplexen Verbundes von erfindungsgemäßen Produktionsmaschinen durch eine einzelne zentrale Steuerungseinrichtung 500 einer Produktionsmaschine ermöglicht wird.

Es ist dabei möglich, daß in dem Verbund, also der Maschineneinheit verschiedene Typen von Produktionsmaschinen miteinander verbunden werden, so daß beispielsweise eine Maschineneinheit entsteht, welche aus Spritzgußmaschinen und Exwsionsmaschinen zusammengesetzt ist. Überdies ist durch die zentrale Steuerungseinrichtung 500 auch die zentralisierte Steuerung verschiedener, gleichzeitig ablaufender Produktionsprozesse möglich.

## Patentansprüche

1. Vorrichtung zur Verarbeitung von Kunststoffen, insbesondere Extrusions- oder Spritzgießmaschine, mit:
● wenigstens einer Materialzuführungseinrichtung (1), durch welche der zu verarbeitende Kunststoff als Rohmaterial zugeführt wird;
● wenigstens einer Plastifiziereinheit (2), durch welche das durch die Materialzuführungseinriehtung zugeführte Material durch den Eintrag von mechanischer und/oder thermischer Energie plastifiziert und/oder homogenisiert wird;
● wenigstens einer Formgebungseinrichtung (3), durch welche das durch die Plastifiziereinheit plastifizierte und/oder homogenisierte Material einem Formgebungsprozess unterzogen und dadurch ein Produkt geformt wird, wobei das Produkt nach einer vorgegebenen Abkühl- und/oder Aushärtezeit der Formgebungseinrichtung entnommen, insbesondere entformt wird und/oder einem weiteren Bearbeitungschritt zugeführt wird;
● wenigstens einer Mikroprozessor-gesteuerten Steuerungseinrichtung (5), welche die Materialzufülrungseinrichtung (1), die Plastifiziereinheit (2) und/oder die Formgebungseinrichtung (3) steuert,
**dadurch gekennzeichnet, dass**
● erste Aufzeichnungsmittel (10) an der Materialzuführungseinrichtung (1) vorgesehen sind, welche mit der Steuerungseinrichtung (5) über eine Verbindung zur Übermittlung von Daten (11) verbunden sind und welche den Rohmaterialvorrat und/oder die Änderung des Rohmaterialvorrats aufzeichnen und an die Steuerungseinrichtung übermitteln, und
● zweite Aufzeichnungsmittel (20) an der Formgebungseinrichtung (3) und/oder der Plastifiziereinheit (2) vorgesehen sind, welche mit der Steuerungseinrichtung (5) über eine Verbindung zur Übermittlung von Daten (21) verbunden sind und welche Prozeß- und/oder Materialparameter des plastifizierten und/oder homogenisierten Materials bzw. des Produktes aufzeichnen und an die Steuerungseinrichtung übermitteln, und
● die Steuerungseinrichtung Auswertungsmittel (50) aufweist, welche aus den von den ersten und zweiten Aufzeichnungsmitteln (10, 20) erhaltenen Daten im Wesentlichen in Echtzeit den zu erwartenden Rohmaterialbedarf und/oder die zu erwartende Produktionsdauer für eine vorgegebene Menge des Produktes bestimmen.

2. **Vorrichtung gemäß Anspruch 1,**
**dadurch gekennzeichnet, dass**
die Auswertungsmittel (50) der Steueningseinrichtung aus den durch die zweiten Aufzeichnungsmittel (20) erhaltenen Daten im Wesentlichen in Echtzeit die Fehlerwahrscheinlichkeit, die Fehlerhäufigkeit und/oder einen Qualitätswert des Produktes bestimmen.

3. Vorrichtung gemäß einem der Ansprüche 1 bis 2,
**dadurch gekennzeichnet, dass**
dritte Aufzeichnungsmittel (30) vorgesehen sind, durch die die Steuerungseinrichtung Maschinenstillstandszeiten, insbesondere Rüstzeiten, Wartungszeiten, Werkzeugabnutzung und Werkzeugstandzeiten, Maschinen- und/oder Werkzeugtehler, Energieverbrauch, Kühlmittelverbrauch aufzeichnen.

4. Vorrichtung gemäß einem der Ansprüche 1 bis 3,
**dadurch gekennzeichnet, dass**
die Steuerungseinrichtung mit einem Datennetz (100), insbesondere einem Intranet oder dem Internet verbunden ist und durch die Steuerungseinrichtung Daten-Dienste in diesem Datennetz zur Verfügung gestellt werden, welche aus einer Gruppe ausgewählt sind, die Web- und/oder XML-Server-Dienste, FTP-Server-Dienste, SQL-Server-Dienste, E-mail-Dienste, Applikationsserver-Dienste, insbesondere J2EE-Dienste, File-Server-Dienste, insbesondere Web-DAV-, SMB-, NFS- oder AFP-Server-Dienste enthält und/oder dass die Steuerungseinrichtung als Endgerät für solche Daten-Dienste fungiert.

5. Vorrichtung gemäß Anspruch 4,
**dadurch gekennzeichnet, dass**
durch die Steuerungseinrichtung mittels der Datendienste im Datennetz die durch die ersten, zweiten und/oder dritten Aufzeichnungsmittel (10, 20, 30) und/oder die durch die Steuerungseinrichtung aufgezeichneten und/oder bestimmten Informationen, insbesondere den zu erwartenden Rohmaterialbedarf und/oder die zu erwartende Produktionsdauer für eine vorgegebene Menge des Produktes und/oder andere hieraus ableitbare Informationen über das Produkt zur Verfügung gestellt werden.

6. Vorrichtung gemäß einem der Ansprüche 1 bis 5,
**dadurch gekennzeichnet, dass**
die Steuerungseinrichtung Mittel (40) aufweiset, die nach Fertigstellung einer vorgegebenen Menge des Produktes oder aber für den Termin der zu erwartenden Fertigstellung einer vorgegebenen Menge des Produktes die Verpackung, den Versand und/oder die Erstellung von Fakturadokumentun vorzugsweise über das Datennetz automatisiert veranlassen.

7. Vorrichtung gemäß einem der Ansprüche 1 bis 6,
**dadurch gekennzeichnet, dass**
die Steuerungseinrichtung mittel (41) aufweist, welche auf der Basis vorgegebener Produktionsmengen, Betriebszeiten, Standzeiten und/oder auf der Basis der durch die Steuerungseinrichtung aufgezeichneten und/oder bestimmten Informationen eine Umrüstung oder Wartung vorzugsweise über das Datennetz, automatisiert veranlassen.

8. Vorrichtung gemäß einem der Ansprüche 1 bis 7,
**dadurch gekennzeichnet, dass**
die Steuerungseinrichtung Mittel (42) aufweist, welche auf der Basis der durch sie aufgezeichneten und/oder bestimmten Informationen eine Bestellung und Lieferung von Rohmaterial, insbesondere unter Berücksichtigung von Lieferzeiten oder Lieferterminen, vorzugsweise über das Datennetz automatisiert veranlassen.

9. Vorrichtung gemäß Anspruch 8,
**dadurch gekennzeichnet, dass**
die Steuerungseinrichtung Mittel (43) aufweist, welche über das Datennetz Rohmaterialspezifikationen, Rohmaterialverfügbarkeit, Rohmaterialpreis wenigstens eines Rohmateriallieferanten ermitteln und gegebenenfalls einen Rohmateriallieferanten aus einer Mehrzahl von Lieferanten automatisiert auswählen.

10. Vorrichtung gemäß einem der Ansprüche 4 bis 9,
**dadurch gekennzeichnet, dass**
durch einen Zugriff auf die Datendienste der Steuerungseinrichtung über das Datennetz, vorzugsweise mittels eines Datendienst-Endgerätes (120), Parameter eines Produktherstellungsprozesses, die vorgegebene Menge eines Produktes, Rohmaterialvorgaben für ein Produkt, ein Mindest-Qualitätswert eines Produktes, ein Dringlichkeitswert und insbesondere eine Lieferterminvorgabe für ein Produkt, Werkzeug- bzw. Maschinenwartungsintervalle veränderbar sind.

11. Vorrichtung gemäß einem der Ansprüche 1 bis 10,
**dadurch gekennzeichnet, dass**
die Steuerungseinrichtung mit wenigstens einem Eingabe- bzw. Lesegerät für personenbezogene Daten (130) verbunden ist, insbesondere mit einem Magnet- und/oder Chipkartenlesegerät oder aber einer Vorrichtung zur Erfassung biometrischer Daten wie z.B. Fingerabdrücke, Handabdrücke bzw. Gesichtserkennungssysteme, durch welches sich Personal, insbesondere Rüst- oder Wartungspersonal bei der Steuerungseinrichtung registrieren und/oder authentifizieren kann.

12. Vorrichtung gemäß einem der Ansprüche 1 bis 11,
**dadurch gekennzeichnet, dass**
die von den ersten, zweiten und/oder dritten Aufzeichnungsmitteln (10, 20, 30) erhaltenen Daten und/oder die von der Steuerungseinrichtung bestimmten Informationen in der Steuerungseinrichtung und/oder einer damit verbundenen Speichereinrichtung (140)
gespeichert werden, wobei die Speicherung insbesondere durch Speichermittel erfolgt, welche aus einer Gruppe ausgewählt sind, die Festplattenspeicher, Magnetband-Speicher, Flash-Speicher, EEPROM-Speicher (Electrically Erasable Programmable Read-Only Memory), RAM (Random Access Memory) enthält.

13. Maschineneinheit,
**dadurch gekennzeichnet, dass**
über ein Datennetz (100), insbesondere ein Intranet oder das Internet die Steuerungseinrichtungen wenigstens zweier Vorrichtungen zur Verarbeitung von Kunststoffen, insbesondere Extrusions- oder Spritzgießmasehinen, gemäß einem der Ansprüche 1 bis 12 miteinander verbunden sind, wobei
eine Steuerungseinrichtung (500) einer ersten Vorrichtung zur Verarbeitung von Kunststoffen als zentrale Steuerungseinheit (Master) für die Steuerungseinrichtungen (5) weiterer Vorrichtungen zur Verarbeitung von Kunststoffen (Slaves) dient, und wobei
die durch die ersten, zweiten und/oder dritten Aufzeichnungsmittel (10, 20, 30) aller Vorrichtungen zur Verarbeitung von Kunststoffen aufgezeichneten Informationen und/oder die durch die Steuerungseinrichtungen (5) der Slaves aufgezeichneten und/oder bestimmten Informationen an den Master (500) übermittelt werden, und
der Master die durch ihn aufgezeichneten und/oder bestimmten Informationen und/oder die von den Slaves erhaltenen Informationen kombiniert und hieraus im Wesentlichen in Echtzeit den zu erwartenden Rohmaterialbedarf und/oder)die zu erwartende Produktionsdauer für eine vorgegebene Menge des Produktes für die Maschineneinheit bestimmt.

14. Maschineneinheit gemäß Anspruch 13,
**dadurch gekennzeichnet, dass**
der Master zweite Anpassungsmittel (510) aufweist, durch welche über das Datennetz eine Steuerung der Parameter des Produktherstellungsprozesses, der vorgegebenen Menge des Produktes, der Rohmaterialvorgaben für das Produkt, eines Mindest-Qualitätswertes des Produktes, der Werkzeug- bzw. Maschinenwartungsintervalle der Slaves (5) bzw. der diesen zugeordneten Vorrichtungen zur Verarbeitung von Kunststoffen erfolgt.

## Claims

1. An apparatus for the processing of plastics, in particular an extrusion- or injection moulding machine, with:
■ at least one material supply device (1) through which the plastic which is to be processed is supplied as raw material,
■ at least one plasticizing unit (2), through which the material which is supplied through the material supply device is plasticized and/or homogenized by the input of mechanical and/or thermal energy;
■ at least one moulding device (3) through which the material which is plasticized and/or homogenized through the plasticizing unit is subjected to a moulding process and thereby a product is formed, wherein the product is removed from the moulding device after a predetermined cooling and/or hardening time, in particular is removed from the mould and/or is supplied to a further processing step;
■ at least one microprocessor-controlled control device (5), which controls the material supply device (1), the plasticizing unit (2) and/or the moulding device (3),
**characterized in that**
■ first recording means (10) are provided on the material supply device (1), which are connected with the control device (5) via a connection for the transmission of data (11) and which record the raw material supply and/or the change to the raw material supply and transmit them to the control device, and
■ second recording means (20) are provided on the moulding device (3) and/or on the plasticizing unit (2), which are connected with the control device (5) via a connection for the transmission of data (21) and which record process- and/or material parameters of the plasticized and/or homogenized material or respectively of the product and transmit them to the control device, and
■ the control device has evaluation means (50) which, from the data obtained from the first and second recording means (10, 20) substantially in real time determine the expected raw material requirement and/or the expected production duration for a predetermined quantity of the product.

2. The apparatus according to Claim 1,
**characterized in that**
the evaluation means (50) of the control device determine from the data obtained by the second recording means (20) substantially in real time the likelihood of error, the frequency of error and/or a quality value of the product.

3. The apparatus according to one of Claims 1 to 2,
**characterized in that**
third recording means (30) are provided, through which the control device records machine downtimes, in particular set-up times, maintenance times, tool wear and tool service life, machine- and/or tool errors, energy consumption, coolant consumption.

4. The apparatus according to one of Claims 1 to 3,
**characterized in that**
the control device is connected with a data network (100), in particular with an intranet or with the internet and data services are provided by the control device in this data network, which are selected from a group which contains web- and/or XML server services, FTP server services, SQL server services, email services, application server services, in particular J2EE services, file server services, in particular web-DAV-, SMB-, NFS- or AFP-server surfaces and/or that the control device functions as a terminal for such data services.

5. The apparatus according to Claim 4,
**characterized in that**
through the control device, by means of the data services in the data network, the information recorded and/or determined by the first, second and/or third recording means (10, 20, 30) and/or by the control device, in particular the expected raw material requirement and/or the expected production duration are provided for a predetermined quantity of the product and/or other information concerning the product which is able to be derived herefrom.

6. The apparatus according to one of Claims 1 to 5,
**characterized in that**
the control device has means (40) which, after completion of a predetermined quantity of the product or else for the deadline of the expected completion of a predetermined quantity of the product initiate in an automated manner the packaging, the dispatch and/or the preparation of invoice documents preferably via the data network.

7. The apparatus according to one of Claims 1 to 6,
**characterized in that**
the control device has means (41) which, on the basis of predetermined production quantities, operating times, service life and/or on the basis of the information recorded and/or determined by the control device initiate in an automated manner a retooling or maintenance preferably via the data network.

8. The apparatus according to one of Claims 1 to 7,
**characterized in that**
the control device has means (42) which on the basis of the information recorded and/or determined thereby initiate in an automated manner an ordering and delivery of raw material, in particular taking into consideration delivery times or delivery deadlines, preferably via the data network.

9. The apparatus according to Claim 8,
**characterized in that**
the control device has means (43) which determine via the data network raw material specifications, raw material availability, raw material price at least of one raw material supplier and if applicable select a raw material supplier in an automated manner from a plurality of suppliers.

10. The apparatus according to one of Claims 4 to 9,
**characterized in that**
through an access to the data services of the control device via the data network, preferably by means of a data service terminal (120), parameters of a product manufacturing process, the predetermined quantity of a product, raw material requirements for a product, a minimum quality value of a product, an urgency value and in particular a delivery deadline requirement for a product, tool- or respectively machine maintenance intervals are changeable.

11. The apparatus according to one of Claims 1 to 10,
**characterized in that**
the control device is connected with at least one input- or respectively reading device for person-related data (130), in particular with a magnetic- and/or chip card reading device or else with a device for detecting biometric data such as e.g. fingerprints, handprints or respectively face recognition systems, by which personnel, in particular personnel involved in set-up or maintenance can register and/or be authenticated at the control device.

12. The apparatus according to one of Claims 1 to 11,
**characterized in that**
the data obtained from the first, second and/or third recording means (10, 20, 30) and/or the information determined by the control device are stored in the control device and/or in a storage device (140) connected therewith, wherein the storage takes place in particular by storage means which are selected from a group which comprises hard disc storage, magnetic tape storage, flash memory, EEPROM memory (Electrically Erasable Programmable Read-Only Memory), RAM (Random Access Memory).

13. A machine unit,
**characterized in that**
via a data network (100), in particular an intranet or the internet, the control devices of at least two devices for the processing of plastics, in particular extrusion- or injection moulding machines, according to one of Claims 1 to 12 are connected with one another, wherein,
a control device (500) of a first device for the processing of plastics serves as the central control unit (master) for the control devices (5) of further devices for the processing of plastics (slaves), and wherein
the information recorded by the first, second and/or third recording means (10, 20, 30) of all devices for the processing of plastics and/or the information recorded and/or determined by the control devices (5) of the slaves, are transmitted to the master (500), and
the master combines the information recorded and/or determined by it and/or the information obtained from the slaves and determines herefrom substantially in real time the expected raw material requirement and/or the expected production duration for a predetermined quantity of the product for the machine unit.

14. The machine unit according to Claim 13,
**characterized in that**
the master has second adaptation means (510), by which via the data network a controlling takes place of the parameters of the product manufacturing process, of the predetermined quantity of the product, of the raw material requirements for the product, of a minimum quality value of the product, of the tool- or respectively machine maintenance intervals of the slaves (5) or respectively of the devices associated therewith for the processing of plastics.

## Revendications

1. Dispositif de mise en oeuvre de matières plastiques, notamment extrudeuse ou presse d'injection, avec :
■ au moins un système d'alimentation de la matière (1) par lequel la matière plastique à mettre en oeuvre est alimentée en tant que matière première ;
■ au moins une unité de plastification (2), ayant pour effet de plastifier et/ou d'homogénéiser la matière alimentée par le système d'alimentation de la matière, par l'introduction d'énergie mécanique et/ou thermique ;
■ au moins un système de façonnage (3), soumettant la matière plastifiée et/ou homogénéisée par l'unité de plastification à un processus de façonnage et façonnant de ce fait un produit, après un temps de refroidissement et/ou de durcissement prédéfini, le produit étant retiré du système de façonnage, notamment démoulé et/ou amené vers une autre étape de traitement ;
■ au moins un système de commande (5), commandé par microprocesseur qui commande le système d'alimentation de la matière (1), l'unité de plastification (2) et/ou le système de façonnage (3),
caractérisé en ce
■ qu'il est prévu des premiers moyens d'enregistrement (10) sur le système d'alimentation de la matière (1) qui sont reliés avec le système de commande (5) par l'intermédiaire d'une connexion pour la transmission de données (11) et qui enregistrent la réserve de matière première et/ou la variation de la réserve de matière première et les transmettent au système de commande et
■ qu'il est prévu des deuxièmes moyens d'enregistrement (20) sur le système de façonnage (3) et/ou sur l'unité de plastification (2) qui sont reliés avec le système de commande (5) par l'intermédiaire d'une connexion pour la transmission de données (21) et qui enregistrent des paramètres de processus et/ou de la matière plastifiée et/ou homogénéisée ou du produit et les transmettent au système de commande et
■ que le système de commande comporte des moyens d'évaluation (50), qui à partir des données reçues de la part des premiers et des deuxièmes moyens d'enregistrement (10, 20) déterminent sensiblement en temps réel les besoins attendus en matière première et/ou la durée de production attendue pour une quantité prédéfinie du produit.

2. Dispositif selon la revendication 1, **caractérisé en ce qu'**à partir des données reçues de la part des deuxièmes moyens d'enregistrement (20), les moyens d'évaluation (50) du système de commande déterminent sensiblement en temps réel la probabilité d'erreurs, la fréquence d'erreurs et/ou une valeur qualitative pour le produit.

3. Dispositif selon l'une quelconque des revendications 1 et 2, **caractérisé en ce qu'**il est prévu des troisièmes moyens d'enregistrement (30) à l'aide desquels le système de commande enregistre les temps d'arrêt de la machine, notamment les périodes de préparation et de nettoyage, les périodes de maintenance, l'usure des outils et la durabilité des outils, les défauts sur la machine et/ou sur les outils, la consommation d'énergie , la consommation d'agent réfrigérant.

4. Dispositif selon l'une quelconque des revendications 1 à 3, **caractérisé en ce que** le système de commande est connecté à un réseau de données (100), notamment à un Intranet ou à Internet et **en ce que** par le système de commande, des services de données qui sont choisis dans le groupe contenant les services des serveur Web et/ou XML, les services des serveurs FTP, les services des serveurs SQL, les services des serveurs de courriel, les services des serveurs d'application, notamment les services J2EE, les services des serveurs de fichiers, notamment les services des serveurs Web DAV, SMB, NFS ou AFP sont mis à disposition dans ledit réseau de données et/ou **en ce que** le système de commande fait office de terminal pour de tels services de données.

5. Dispositif selon la revendication 4, **caractérisé en ce que** le système de commande met à disposition au moyen des services de données dans le réseau de données les informations enregistrées et/ou déterminées par le premier, le deuxième et/ou le troisième moyen d'enregistrement (10, 20, 30) et/ou par le système de commande, notamment le besoin de matière premières attendu et/ou la durée de production attendue pour une quantité prédéfinie du produit et/ou d'autres informations concernant le produit qui peuvent en être déduites.

6. Dispositif selon l'une quelconque des revendications 1 à 5, **caractérisé en ce que** le système de commande comporte des moyens (40) qui, après l'achèvement d'une quantité prédéfinie du produit ou encore pour la date de l'achèvement attendu d'une quantité prédéfinie du produit initient de façon automatisée l'emballage, l'expédition et/ou l'établissement de documents de facturation, de préférence via le réseau de données.

7. Dispositif selon l'une quelconque des revendications 2 à 6, **caractérisé en ce que** le système de commande comporte des moyens (41), qui sur la base de quantités de production prédéfinies, de périodes de fonctionnement, de périodes de préparation et de nettoyage et/ou sur la base des informations enregistrées et/ou déterminées pas le système de commande initient de façon automatisée un rééquipement ou une maintenance, de préférence via le réseau de données.

8. Dispositif selon l'une quelconque des revendications 1 à 7, **caractérisé en ce que** le système de commande comporte des moyens (42) qui sur la base d'informations enregistrées et/ou déterminées par ses soins initient de façon automatisée une commande et une livraison de matière première, notamment sous considération de délais de livraison ou de dates de livraison, de préférence via le réseau de données.

9. Dispositif selon la revendication 8, **caractérisé en ce que** le système de commande comporte des moyens (43) qui via le réseau de données recherchent des spécifications de la matière première, une disponibilité de la matière première, le prix de la matière première et qui sélectionnent le cas échéant de façon automatisée un fournisseur de la matière première parmi une pluralité de fournisseurs.

10. Dispositif selon l'une quelconque des revendications 4 à 9, **caractérisé en ce que** par un accès aux services de données du système de commande via le réseau de données, de préférence au moyen d'un terminal de services de données (120), des paramètres d'un processus de fabrication du produit, la quantité prédéfinie d'un produit, des prescriptions pour la matière première pour un produit, une valeur qualitative minimale pour un produit, une valeur pour l'urgence et notamment une prescription pour le délai de livraison d'un produit, des intervalles de maintenance des outils ou de la machine sont modifiables.

11. Dispositif selon l'une quelconque des revendications 1 à 10, **caractérisé en ce que** le système de commande est connecté à au moins un périphérique de saisie de données ou un lecteur pour des données relatives aux personnes (130), notamment à un lecteur magnétique et/ou de carte à puce ou encore à un dispositif pour l'enregistrement de données biométriques, telles que par exemple des empreintes digitales, des empreintes de la main ou des systèmes de reconnaissance faciale, via lequel le personnel, notamment le personnel en charge de la préparation et du nettoyage ou de le maintenance peut s'enregistrer et/ou s'authentifier auprès du système de commande.

12. Dispositif selon l'une quelconque des revendications 1 à 11, **caractérisé en ce que** les données obtenues par les premiers, les deuxièmes et/ou les troisièmes moyens d'enregistrement (10, 20, 30) et/ou les informations déterminées par le système de commande sont mémorisées dans le système de commande et/ou dans un système de mémorisation (140) relié à ce dernier, la mémorisation s'effectuant notamment par des moyens de mémorisation qui sont choisis dans un groupe qui contient les mémoires sur disque dur, les mémoires sur bande magnétique, les mémoires Flash, les mémoires EEPROM (Electrically Erasable Programmable Read-Only Memory), les RAM (Random Access Memory).

13. Unité de machine, **caractérisée en ce que** via un réseau de donnée (100), notamment un Intranet ou Internet, les systèmes de commande d'au moins deux dispositifs de mise en oeuvre de matières premières, notamment d'extrudeuses ou de presses d'injection selon l'une quelconque des revendications 1 à 12 sont interconnectés,
un système de commande (500) d'un premier dispositif de mise en oeuvre de matières plastiques faisant office d'unité de commande centrale (maître) pour les systèmes de commande (5) d'autres dispositifs de mises en oeuvre de matières plastiques (esclaves) et
les informations enregistrées par les premières, deuxièmes et/ou troisièmes moyens d'enregistrement (10, 20, 30) de tous les dispositifs de mise en oeuvre de matières plastiques et/ou les informations enregistrées et/ou déterminées par les systèmes de commande (5) des esclaves étant transmises au maître (500) et
le maître associant les informations enregistrées et/ou déterminées par ses soins et/ou les informations reçues de la part des esclaves et déterminant à partir de là sensiblement en temps réel pour l'unité de machine le besoin attendu en matière première et/ou la durée de production attendue pour une quantité prédéfinie du produit.

14. Unité de machine selon la revendication 13, **caractérisée en ce que** le maître comporte deux moyens d'adaptation (510), à l'aide desquels via le réseau de données il s'effectue un contrôle des paramètres du processus de fabrication du produit, de la quantité prédéfinie de produit, des prescriptions pour la matière première pour le produit, d'une valeur qualitative minimale pour le produit, des intervalles de maintenance des outils ou de la machine des esclaves (5) ou des dispositifs de mise en oeuvre de matières plastiques qui leurs sont associés.
